**Europäisches Patentamt**

**European Patent Office**

**Office européen des brevets**

(11) Veröffentlichungsnummer: **0 250 753**
**B1**

## EUROPÄISCHE PATENTSCHRIFT

(45) Veröffentlichungstag der Patentschrift:
25.10.89

(21) Anmeldenummer: **87105941.6**

(22) Anmeldetag: **23.04.87**

(51) Int. Cl.⁴: **F 02 M 35/10**

(54) Ansaugsystem für eine Hubkolben-Brennkraftmaschine.

(30) Priorität: **03.07.86 DE 3622273**

(43) Veröffentlichungstag der Anmeldung:
**07.01.88 Patentblatt 88/1**

(45) Bekanntmachung des Hinweises auf die Patenterteilung:
**25.10.89 Patentblatt 89/43**

(84) Benannte Vertragsstaaten:
**DE ES FR GB IT NL SE**

(56) Entgegenhaltungen:
FR-A-2 121 177
FR-A-2 492 463
GB-A-2 134 179

PATENT ABSTRACTS OF JAPAN, Band 8, Nr. 37 (M-277) 1474 , 17. Februar 1984; & JP-A-58 192 921 (YAMAHA HATSUDOKI K.K.) 10-11-1983
PATENT ABSTRACTS OF JAPAN, Band 7, Nr. 275 (M-261) 1420 , 8. Dezember 1983; & JP-A- 58 152 123 (SHIYUUICHI KITAMURA) 09-09-1983
PATENT ABSTRACTS OF JAPAN, Band 11, Nr. 14 (M-553) 2461 , 14. Januar 1987; & JP-A-61 190 115 (NISSAN MOTOR CO. LTD) 23-08-1986

(73) Patentinhaber: **Dr.Ing.h.c. F. Porsche Aktiengesellschaft, Porschestrasse 42, D-7000 Stuttgart 40 (DE)**

(72) Erfinder: **Rutschmann, Erwin, Dipl.- Ing., Schönblickstrasse 21, D-7533 Tiefenbronn (DE)**

## Beschreibung

Die Erfindung betrifft ein Ansaugsystem zu einem Einlaßventil einer Hubkolben-Brennkraftmaschine nach dem Oberbegriff des Anspruchs 1.

Ein derartiges Ansaugsystem ist aus Patent Abstract of Japan, Band 7, Nr. 275 (M - 261) [1420], 8. Dezember 1983; JP-A-58 152 123 bekannt. Dort ist in der Ansaugleitung zu einem Einlaßventil eine von außen betätigbare Sperrklappe eingesetzt. Unmittelbar vor der Sperrklappe zweigt von der Ansaugleitung eine Bypaßleitung ab und mündet hinter der Sperrklappe wieder in die Ansaugleitung. Die Bypaßleitung enthält ein Rückschlagventil, das sich bei in den Zylinder einströmender Ansaugluft öffnet und bei Rückströmen der Ansaugluft schließt. Es kann auf diese Weise vermieden werden, daß ein Teil des in den Zylinder eingebrachten Kraftstoff-Luftgemisches beim Kompressionshub durch das noch geöffnete Einlaßventil hindurch in die Ansaugleitung zurückgeschoben wird und die Füllung des Zylinders verschlechtert wird.

In GB-A-2 134 179 ist ein Ansaugsystem mit einer Hauptansaugleitung und einer zu ihr parallelen, zu einem zweiten Einlaßventil führenden Nebenansaugleitung beschrieben. Eine an der Trennwand zwischen der Hauptansaugleitung und der Nebenansaugleitung befindliche Federlamelle wird bei hohem Volumenstrom der Ansaugluft radial von der Trennwand weggebogen und gibt der Ansaugluft den Weg zu dem zweiten Einlaßventil frei.

Es ist die Aufgabe der Erfindung, eine an die Ansaugleitung angeschlossene Bypaßleitung mit Rückschlagventil so zu gestalten, daß ihr freier Querschnitt möglichst groß ist und die Drosselverluste klein gehalten werden können.

Zur Lösung dieser Aufgabe dienen die kennzeichnenden Merkmale des Anspruchs 1. Wenn die Abzweigstelle der Bypaßleitung aus mehreren, radial durchgehenden Fenstern in der Ansaugleitung besteht, die jeweils durch außen an der Ansaugleitung befestigte Federlamellen abgedeckt sind, kann für die vorwärts in den Zylinder einströmende Ansaugluft die ganze Mantelfläche der Ansaugleitung als Durchtrittsfläche genutzt werden. Die Drosselverluste können so recht klein gehalten werden. Ein Rückströmen der Ansaugluft wird durch die zurückfedernden Federlamellen verhindert. Erhebliche Drosselverluste entstehen erst ab einer Drehzahl der Brennkraftmaschine, die höher als ca. 3000 1/min. liegt. Nun kann die Drehklappe geöffnet werden, ohne daß der Betrieb der Brennkraftmaschine durch zurückströmende Ansaugluft beeinträchtigt würde.

Ein Ausführungsbeispiel der Erfindung ist in der Zeichnung dargestellt und wird nachfolgend erläutert.

Es zeigt

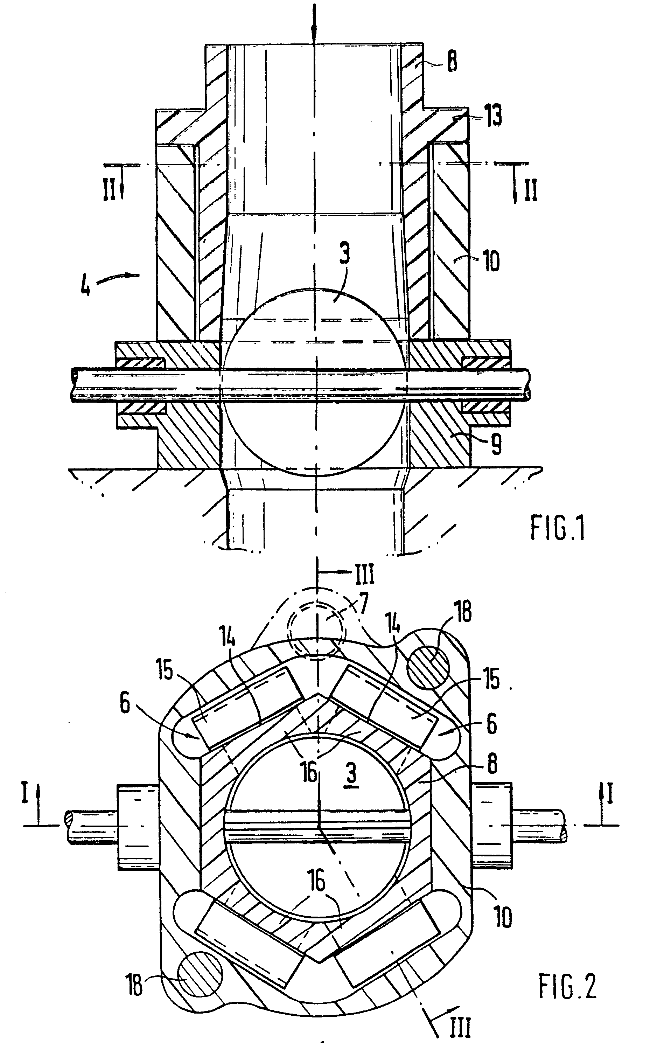

Fig. 1    Längsschnitt durch die Ansaugleitung nach Linie I - I der Fig. 2,

Fig. 2    Querschnitt durch die Ansaugleitung nach Linie II - II der Fig. 1,

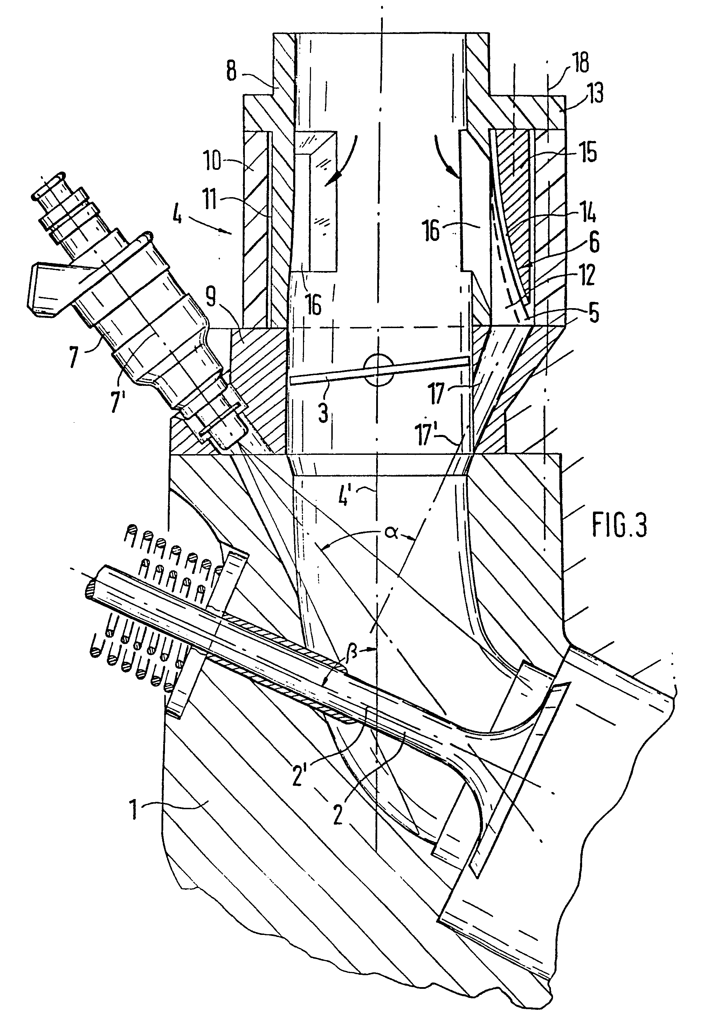

Fig. 3    Längsschnitt durch die Ansaugleitung nach Linie III - III der Fig. 2.

Zu einem im Zylinderkopf 1 einer Hubkolben-Brennkraftmaschine längsgeführten Einlaßventil 2 führt ein Ansaugsystem für ein Kraftstoff-Luft-Gemisch, das aus einer durch eine Sperrklappe 3 verschließbaren Ansaugleitung 4, einer Bypaßleitung 5 mit Rückschlagventil 6 und einer Einspritzdüse 7 für Kraftstoff besteht. Die Ansaugleitung 4 ist zusammengesetzt aus einem rohrförmigen Lamellenträger 8 und einem koaxialen Klappengehäuse 9 mit gleichem Innendurchmesser, in dem die Sperrklappe 3 von außen drehbar gelagert ist. Am Klappengehäuse 9 ist ein Rohrstück 10 befestigt, das unter Bildung eines Ringspaltes 11 und von vier an seinem Umfang angeordneten Taschen 12 den Lamellenträger 8 rings umgibt und an seinem Flansch 13 angeschraubt ist. In jeder der vier Taschen 12 ist eine Federlamelle 14 untergebracht, die im geöffneten, aufgebogenen Zustand gezeigt ist und sich dabei an die gebogene Kontur eines Füllstückes 15 anlegt, das am Lamellenträger 8 angeflanscht ist. Bei Rückströmen des Ansauggemisches federn die Federlammellen 14 zurück und verschließen Fenster 16 des Lamellenträgers 8. An die Fenster 16 schließen sich Bohrungen 17 des Klappengehauses 9 an, die mit den Fenstern 16 zusammen die Bypaßleitung 5 bilden.

Die Fertigung und Montage der Ansaugleitung wird erleichtert, wenn sie aus Kunststoffteilen zusammengesetzt ist. An dem Flansch 13 ist das gesamte Ansaugsystem mit zwei Schrauben 18 am Zylinderkopf 1 befestigt.

Die Achsen 17' der Bohrungen 17 schneiden sich auf der Längsachse 4' der Ansaugleitung 4 gemeinsam mit einer Längsachse 7' einer Einspritzdüse 7, die ebenfalls im Klappengehäuse 9 stromab der Sperrklappe 3 befestigt ist. Es wird damit erreicht, daß die Bypaßluft sich mit dem eingespritzten Kraftstoff im Achsbereich der Ansaugleitung 4 trifft und so eine intensive Durchmischung des Kraftstoffes mit der Ansaugluft sichergestellt ist. Der Winkel α zwischen der Achse 17' der Bohrungen 17 und der Längsachse 7' der ihr diametral gegenüberliegenden Einspritzdüse 7 beträgt etwa 65°. Er ist annähernd genau so groß wie der Winkel β, den die Längsachse 2' des Einlaßventils 2 zur Längsachse 4' der Ansaugleitung 4 bildet.

Um ein möglichst geringes Volumen des Kraftstoff-Luft-Gemisches aus dem Zylinderkopf 1 zurückströmen zu lassen, ist die Sperrklappe 3 und das aus den Federlamellen 14 und Fenstern 16 gebildete Rückschlagventil 6 so nah wie möglich am Zylinderkopf 1 angeordnet. Auch die Füllstücke 15 haben den Zweck, dem rückströmenden Gemisch wenig Raum zu lassen.

Im unteren Drehzahlbereich der Brennkraftmaschine ist die Sperrklappe 3 geschlossen. Die Luft strömt über die Schlitze 16 und die Bohrungen 17 in den Zylinderkopf 1 ein. Mit zunehmender Drehzahl der Brennkraftmaschine steigt die Luftgeschwindigkeit immer weiter an, die Federlamellen verbiegen sich nach außen, bis sie sich an die Füllstücke anlegen. Um die Drosselverluste klein zu halten, wird bei einer Drehzahl der Brennkraftmaschine von ca. 3500 1/min die Sperrklappe selbsttätig geöffnet und bleibt bis zur Maximaldrehzahl offen. In diesem Drehzahlbereich tritt kein Rückströmen des Gemischen mehr auf. Das öffnen der Sperrklappe begünstigt den hier auftretenden dynamischen Aufladeeffekt.

**Patentansprüche**

1. Ansaugsystem zu einem im Zylinderkopf einer Brennkraftmaschine längsgeführten Einlaßventil mit einer in dessen Ansaugleitung eingesetzten, von außen betätigbaren Sperrklappe und einer die Sperrklappe umgehenden Bypaßleitung, in die ein Rückschlagventil eingesetzt ist, dadurch gekennzeichnet, daß die Abzweigstelle der Bypaßleitung (5) aus mehreren, radial durchgehenden Fenstern (16) in der Ansaugleitung (4) besteht, die jeweils durch außen an der Ansaugleitung (4) befestigte Federlamellen (14) so abgedeckt sind, daß die Federlamellen bei Vorwärtsströmen der Ansaugluft die Fenster (16) durch radial federnde Aufbiegung freigeben und sie bei Rückströmen der Ansaugluft verschließen.

2. Ansaugsystem nach Anspruch 1, dadurch gekennzeichnet, daß die Ansaugleitung (4) aus einem rohrförmigen Lamellenträger (8), einem koaxial an ihm angeflanschten Klappengehäuse (9) zur Drehlagerung der Sperrklappe (3) und einem den Lamellenträger (8) unter Bildung von Taschen (12) für die Federlamellen (14) rings umgebenden, am Klappengehäuse (3) befestigten Rohrstück (10) besteht.

3. Ansaugsystem nach Anspruch 2, dadurch gekennzeichnet, daß die Federlamellen (14) in Offenstellung an den ihrer Biegung angepaßten Konturen von Füllstücken (15) anliegen.

4. Ansaugsystem nach einem der Ansprüche 1 bis 3, dadurch gekennzeichnet, daß sich zur Bildung der Bypaßleitung an die Fenster (16) Bohrungen (17) des Klappengehäuses (9) anschließen, wobei die Bohrungen (17) spitzwinklig zur Längsachse (4') der Ansaugleitung (4) verlaufen.

5. Ansaugsystem nach Anspruch 3 und 4, dadurch gekennzeichnet, daß am Klappengehäuse (9) stromab der Sperrklappe (3) eine Einspritzdüse (7) befestigt ist.

6. Ansaugsystem nach Anspruch 5, dadurch gekennzeichnet, daß sich die Längsachse (7') der Einspritzdüse (7) und die Achsen (17') der Bohrungen (17) auf der Längsachse (4') der Ansaugleitung (4) schneiden.

7. Ansaugsystem nach Anspruch 5 und 6, dadurch gekennzeichnet, daß der Winkel (α) zwischen den Achsen (17', 7') der Bohrungen (17) und der Einspritzdüse (7) etwa gleich dem Winkel (β) zwischen der Längsachse (4') der Ansaugleitung (4) und der Längsachse (2') des Einlaßventils (2) ist.

8. Ansaugsystem nach einem der Ansprüche 1 bis 7, dadurch gekennzeichnet, daß die Sperrklappe (3) gesteuert wird durch die Drehzahl der Brennkraftmaschine und bei Drehzahlen oberhalb von ca. 3500 1/min voll geöffnet ist.

**Claims**

1. An intake system to an inlet valve guided longitudinally in the cylinder head of an internal combustion engine and having an externally actuatable blocking valve fitted in the intake line thereof and a by-pass line which by-passes the blocking valve and into which a return valve valve is fitted, characterized in that the branching point of the by-pass line (5) comprises a plurality of radially extending windows (16) in the intake line (4), the windows (16) being in each case covered in such a way by spring plates (14) secured to the intake line (4) on the outside that the spring plates free the windows (16) by radially resilient bending when the intake air flows forward and close them when the intake air flow is reversed.

2. An intake system according to claim 1, characterized in that the intake line (4) comprises a tubular plate carrier (8), a valve casing (9) flanged coaxially thereto for the rotary mounting of the blocking valve (3), and a tube member (10) surrounding the plate carrier (8) to form recesses (12) for the spring plates (14) and which is secured to the valve casing (3) [sic].

3. An intake system according to claim 2, characterized in that the spring plates (14) rest in the open position on the profiles of filler members (15) adapted to the bending of the said spring plates (14).

4. An intake system according to any one of claims 1 to 3, characterized in that, in order to form the by-pass line, bores (17) in the valve casing (9) are joined to the windows (16), the bores (17) extending at an acute angle to the longitudinal axis (4') of the intake line (4).

5. An intake system according to claims 3 and 4, characterized in that an injection nozzle (7) is secured to the valve casing (9) downstream of the blocking valve (3).

6. An intake system according to claim 5, characterized in that the longitudinal axis (7') of the injection nozzle (7) and the axes (17') of the bores (17) intersect on the longitudinal axis (4') of the intake line (4).

7. An intake system according to claims 5 and 6, characterized in that the angle (α) between the axes (17', 7') of the bores (17) and the injection nozzle (7) is approximately equal to the angle (β) between the longitudinal axis (4') of the intake line (4) and the longitudinal axis (2') of the inlet valve (2).

8. An intake system according to any one of claims 1 to 7, characterized in that the blocking valve (3) is controlled by the rotational speed of the internal combustion engine and is fully opened at speeds above approximately 3500 1/min.

**Revendications**

1. Système d'admission menant à une soupape d'admission guidée longitudinalement dans la culasse d'un moteur à combustion interne, comportant un clapet d'obturation placé dans son conduit d'admission, actionnable de l'extérieur, et un conduit de dérivation contournant le clapet d'obturation, dans lequel est placée une soupape de retenue, caractérisé en ce que le point de dérivation du conduit de dérivation (5) est constitué de plusieurs fenêtres (16) traversant radialement le conduit d'admission (4) et qui sont fermées chacune par des lamelles formant ressort (14), fixées de l'extérieur sur le conduit d'admission (4), en ce que les lamelles formant ressort libèrent les fenêtres (16) en cédant élastiquement et radialement, pendant l'écoulement vers l'avant de l'air d'aspiration, et les ferment au retour de l'air d'aspiration.

2. Système d'admission selon la revendication 1, caractérisé en ce que le conduit d'admission (4) est constitué d'un support de lamelles (8) tubulaire d'un boîtier de clapet (9) coaxial bridé sur celui-ci, pour la suspension tournante du clapet d'obturation (3), et d'une pièce tubulaire (10) entourant le support de lamelles (8), en formant des poches (12) pour les lamelles à ressort (14), et fixée sur le boîtier de clapet (9).

3. Système d'admission selon la revendication 2, caractérisé en ce que les lamelles formant ressort (14) s'appliquent en position d'ouverture, contre les contours des pièces de remplissage (15) adaptés à leur flexion.

4. Système d'admission selon l'une des revendications 1 à 3, caractérisé en ce que pour former le conduit de dérivation, des perçages (17) du boîtier de clapet (9) prolongent les fenêtres (16), les perçages (17) formant un angle aigu avec l'axe longitudinal (4') du conduit d'admission (4).

5. Système d'admission selon les revendications 3 et 4, caractérisé en ce qu'un injecteur (7) est fixé sur le boîtier de clapet (9), en aval du clapet d'obturation (3).

6. Système d'admission selon la revendication 5, caractérisé en ce que l'axe longitudinal (7') de l'injecteur (7) et les axes (17') des perçages (17) se coupent sur l'axe longitudinal (4') du conduit d'admission (4).

7. Système d'admission selon les revendications 5 et 6, caractérisé en ce que l'angle (α) compris entre les axes (17') des perçages (17) et l'injecteur (7) est à peu près égal à l'angle (β) compris entre l'axe longitudinal (4') du conduit d'admission (4) et l'axe longitudinal (2') de la soupape d'admission (2).

8. Système d'admission selon l'une des revendications 1 à 7, caractérisé en ce que le clapet d'obturation (3) est commandé par la vitesse de rotation du moteur à combustion interne, et est totalement ouvert pour les vitesses supérieures à environ 3500 tr/mn.

EP 0 250 753 B1

FIG.1

FIG.2

FIG.3